# EUROPEAN PATENT APPLICATION

(11) **EP 4 290 140 A1**
(43) Date of publication of application: **13.12.2023**
(21) Application number: 21923997.7
(22) Date of filing: 13.04.2021
(51) Int. Cl.: F24C 15/20

(54) **MOUNTING DEVICE FOR RANGE HOOD, AND RANGE HOOD**

(30) Priority: 07.02.2021 CN 202110178995
(71) Applicant: Foshan Shunde Midea Washing Appliances Manufacturing Co., Ltd., Foshan, Guangdong 528311 (CN)
(72) Inventor: HAO, Meng, Foshan City, Guangdong 528311 (CN)
(74) Representative: RGTH
(86) International application number: PCT/CN2021/086929
(87) International publication number: WO 2022/165988

(57) **Abstract**

Provided are a mounting device for a range hood, and a range hood. The mounting device includes a mounting plate, a support plate, and a limit member. The support plate is provided on the mounting plate and extends away from the mounting plate. The support plate is configured to support a body of the range hood. A limit member is provided on a support surface of the support plate and is configured to limit a position of the body of the range hood on the support plate in a direction perpendicular to a main surface of the mounting plate. In this way, the body of the range hood can be mounted with the mounting device in a flat pushing manner or in a manner of lifting by a height threshold and then pushing. Compared with mounting devices for hanging the body of the range hood by means of a hook, the height by which the body of the range hood is required to be lifted is smaller. Therefore, when the range hood is mounted in a cabinet, a gap between the body of the range hood and a bottom of the cabinet can be reduced or even eliminated, thereby making the overall structure more compact, and reducing the occupied space.

## Description

This application claims priority of Chinese Patent Application with the application number 2021101789950, filed on February 07, 2021, entitled "MOUNTING DEVICE FOR RANGE HOOD, AND RANGE HOOD", which is incorporated herein by reference in its entirety.

### FIELD

The present disclosure relates to the technical field of kitchen appliances, and in particular, to a mounting device for a range hood and a range hood.

### BACKGROUND

The mounting device of a wall-mounted household appliance generally comprises a mounting plate fixed on a wall and a hook fixedly provided on the mounting plate, and the wall-mounted household appliance is directly hung on the hook via a mounting hole on a back plate. Therefore, the mounting is relatively convenient.

The inventor of the present disclosure has found in a long-term research and development that in order to ensure a firm hanging, the hook needs to have a certain length, and a mounting space needs to be reserved when mounting a wall-mounted household appliance. When applied to the mounting of a range hood in a cabinet, the gap between the mounted range hood and the bottom of the cabinet is relatively large, thereby occupying a large space.

### SUMMARY

The present disclosure provides a mounting device for a range hood and a range hood, to solve the technical problem in the related art that wall-mounted household appliances occupy a large space due to the height reserved for mounting.

In order to solve the above technical problem, a technical solution of the present disclosure is to provide a mounting device for a range hood. The mounting device comprises a mounting plate, a support plate, and a limit member. The support plate is provided on the mounting plate and extending away from the mounting plate, and the support plate supports a body of the range hood. The limit member is provided on a support surface of the support plate, and limits a position of the body of the range hood on the support plate in a direction perpendicular to a main surface of the mounting plate.

In an embodiment, the support plate extends in the direction perpendicular to the main surface of the mounting plate.

In an embodiment, the limit member is a limit plate arranged obliquely with respect to the support plate, and has a first end connected to the support plate. The limit plate extends toward the mounting plate from the first end to a second end of the limit plate.

In an embodiment, the limit member is a protrusion protruding from the support surface of the support plate.

In an embodiment, the limit member is a limit plate arranged obliquely with respect to the support plate, and has a first end connected to an end of the support plate away from the mounting plate. The limit plate extends away from the mounting plate from the first end to a second end of the limit plate.

In an embodiment, the limit plate has an extension portion extending away from the mounting plate from the second end of the limit plate.

In an embodiment, the support plate has a through hole, and the limit member is a floating mechanism. The floating mechanism comprises a fixing base, an elastic member, and a limit cap. The fixing base is fixedly connected to a side of the support plate facing away from the support surface of the support plate, and the support surface supports the body of the range hood. The elastic member has an end provided on the fixing base. The limit cap is connected to another end of the elastic member and passes through the through hole.

In an embodiment, the mounting plate further has a guide member extending away from the mounting plate.

In an embodiment, the mounting device further comprises a reinforcement member connected between the support plate and the mounting plate.

In order to solve the above technical problem, another technical solution of the present disclosure is to provide a range hood comprising a body and the mounting device as described above. The body comprises a back plate having a mounting hole, and the limit member is engaged into the mounting hole to mount the body of the range hood on the mounting device.

The mounting device for a range hood of the present disclosure comprises the mounting plate, the support plate, and the limit member. The support plate is provided on the mounting plate and extending away from the mounting plate, and the support plate is configured to support the body of the range hood. The limit member is provided on the support surface of the support plate, and is configured to limit the position of the body of the range hood on the support plate in the direction perpendicular to the main surface of the mounting plate. In this way, the body of the range hood can be mounted to the mounting device in a flat pushing manner or in a manner of lifting at a height threshold and then being pushed. Compared with the mounting device for hanging a body of a range hood by means of a hook, the height at which the body of the range hood is required to be lifted is relatively small. Accordingly, when the range hood is mounted in a cabinet, the gap between the body of the range hood and the bottom of the cabinet can be reduced or even eliminated, thereby making the overall structure more compact and reducing the occupied space.

### BRIEF DESCRIPTION OF DRAWINGS

In order to more clearly illustrate the technical solutions of embodiments of the present disclosure, a brief description will be given below with reference to the accompanying drawings which are required to be used in the description of the embodiments. It is obvious that the drawings in the description below are only some embodiments of the present disclosure, and those skilled in the art can obtain other drawings based on these drawings without involving any inventive effort.
FIG. 1 is a schematic front view showing a structure of a mounting device for a range hood in a first adjustment state according to an embodiment of the present disclosure.
FIG. 2 is a schematic side view showing a structure of a mounting device for a range hood in a first adjustment state according to an embodiment of the present disclosure.
FIG. 3 is a schematic front view showing a structure of a mounting device for a range hood in a second adjustment state according to an embodiment of the present disclosure.
FIG. 4 is a schematic side view showing a structure of a mounting device for a range hood in a second adjustment state according to an embodiment of the present disclosure.
FIG. 5 is a schematic perspective view showing a structure of a mounting device for a range hood according to another embodiment of the present disclosure.
FIG. 6 is a schematic side view showing a structure of a mounting device for a range hood according to another embodiment of the present disclosure.
FIG. 7 is a schematic side view showing a structure of a mounting device for a range hood according to further another embodiment of the present disclosure.
FIG. 8 is a schematic perspective view showing a structure of a mounting device for a range hood according to yet another embodiment of the present disclosure.
FIG. 9 is a schematic side view showing a structure of a mounting device for a range hood according to still another embodiment of the present disclosure.
FIG. 10 is a schematic perspective view showing a structure of a mounting device for a range hood according to further another embodiment of the present disclosure.
FIG. 11 is a schematic side view showing a structure of a mounting device for a range hood according to yet another embodiment of the present disclosure.
FIG. 12 is a schematic perspective view showing a structure of a mounting device for a range hood according to still another embodiment of the present disclosure.
FIG. 13 is a schematic explosive view showing a structure of a mounting device for a range hood according to further another embodiment of the present disclosure.
FIG. 14 is a schematic perspective view showing a structure of a mounting device for a range hood according to still another embodiment of the present disclosure.
FIG. 15 is a schematic perspective view showing a structure of a mounting device for a range hood according to yet another embodiment of the present disclosure.
FIG. 16 is a schematic perspective view showing a structure of a mounting device for a range hood according to further another embodiment of the present disclosure.
FIG. 17 is a schematic sectional view showing a structure of a range hood according to an embodiment of the present disclosure.
FIG. 18 is an enlarged partial view of the range hood shown in FIG. 17.

### DESCRIPTION OF EMBODIMENTS

The embodiments of the present disclosure will be described more clearly and fully hereinafter with reference to the accompanying drawings, in which embodiments of the present disclosure are shown. It is to be understood that the embodiments described herein are only some embodiments of the present disclosure, instead of all embodiments of the present disclosure. Based on the embodiments of the present disclosure, all other embodiments obtained by those skilled in the art without inventive effort fall within the scope of the present disclosure.

Terms "first" and "second" of the present disclosure are only used for descriptive purposes, and cannot be understood as indicating or implying relative importance or implicitly indicating the number of indicated technical features. In the description of the present disclosure, "a plurality of" means at least two, e.g., two or three, unless otherwise specifically defined. Furthermore, the terms "comprise" and "have", as well as any variations thereof, are intended to cover a non-exclusive inclusion. For example, a process, method, system, product or device that comprises a series of steps or units is not limited to the listed steps or units, but may optionally comprise other steps or units not listed or inherent to such process, method, article, or apparatus. A term "and/or" in the present disclosure is merely an association relationship describing associated objects, and indicates that there may be three relationships. For example, A and/or B may indicate three cases as below: A exists alone, A and B exist at the same time, and B exists alone. In addition, a character "/" in the present disclosure generally indicates that former and later associated objects are in an "or" relationship.

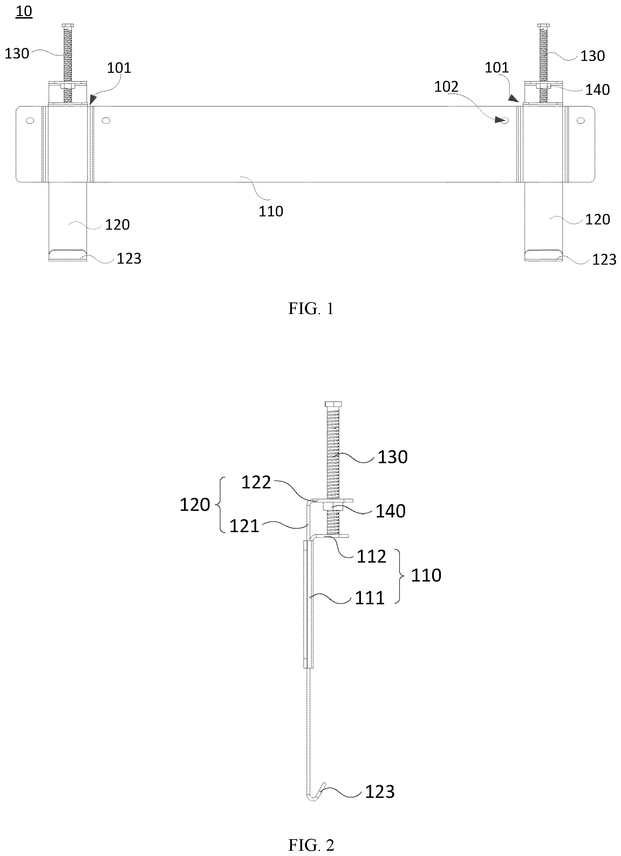

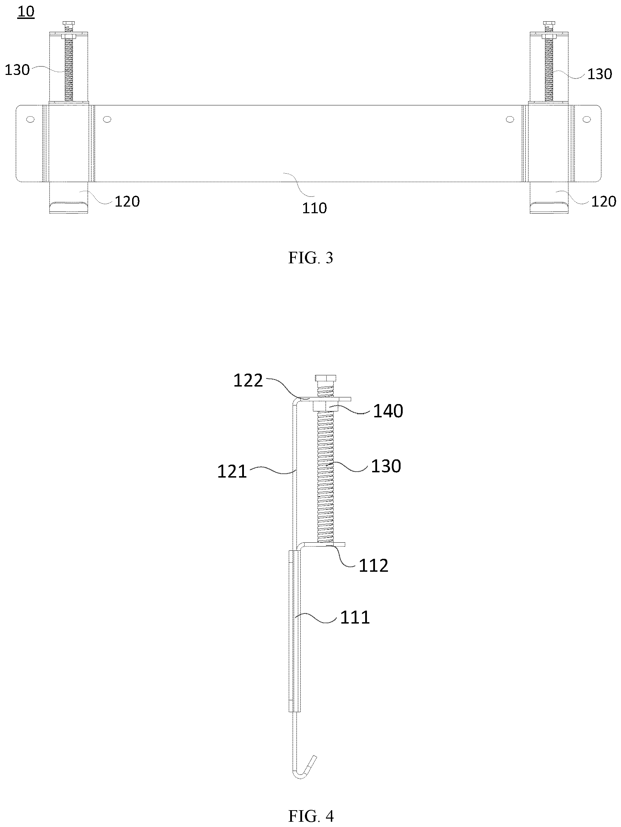

With reference to FIGS. 1 to 4, a mounting device 10 for a range hood according to an embodiment of the present disclosure comprises a mounting plate 110, a hanging plate 120, and an adjustment member 130. The mounting plate 110 is formed with a guide groove 101, and the hanging plate 120 penetrates through the guide groove 101 to move relative to the mounting plate 110 along the guide groove 101. The hanging plate 120 is configured to support a body of the range hood, and the adjustment member 130 is configured to move the hanging plate 120 and the mounting plate 110 relative to each other. In this way, a height of the body of the range hood supported by the hanging plate 120 can be adjusted. In this way, the mounting height of the body of the range hood can be adjusted more conveniently to adapt to different environments. Further, when the range hood is mounted in a cabinet, a gap between the body of the range hood and a bottom of the cabinet can be reduced, thereby making the overall structure more compact and reducing the occupied space.

In the present embodiment, the mounting plate 110 comprises a main support plate 111 and a first adjustment plate 112. The main support plate 111 has a guide groove 101, the first adjustment plate 112 is connected to the main support plate 111 and extends in a direction away from the main support plate 111. The hanging plate 120 comprises a body plate 121 and a second adjustment plate 122. The body plate 121 is provided in the guide groove 101, and the second adjustment plate 122 is connected to the body plate 121 and extends in a direction away from the body plate 121. The adjustment member 130 is connected to the second adjustment plate 122 and abuts against the first adjustment plate 112, and is configured to adjust a distance between the first adjustment plate 112 and the second adjustment plate 122. Since the mounting plate 110 is fixedly disposed on a carrier, such as a wall, through the mounting hole 102, the distance between the first adjustment plate 112 and the second adjustment plate 122 is adjusted, and thus the hanging plate 120 can move with respect to the mounting plate 110 along the guide groove 101. In this way, the height of the body of the range hood supported by the hanging plate 120 can be changed, thereby achieving the height adjustment of the body of the range hood.

In the present embodiment, the adjustment member 130 is a screw rod, the second adjustment plate 122 is fixedly provided with a nut 140, and the nut 140 has a threaded hole. The screw rod passes through the second adjustment plate 122, and is in threaded connection with the nut 140. The first adjustment plate 112 is subject to a force by rotating the screw rod. Since the first adjustment plate 112 is fixedly disposed, the second adjustment plate 122 moves in a direction toward or away from the first adjustment plate 112 under the action of a relative force, thereby achieving adjustment of the distance between the first adjustment plate 112 and the second adjustment plate 122. In addition, the screw rod is connected to the second adjustment plate 122 and abuts against the first adjustment plate 112. As a result, an external force acts on an exposed portion of the screw rod located on a side of the second adjustment plate 122 away from the first adjustment plate 112. Accordingly, the exposed portion cannot interfere with the body of the range hood located on a side of the first adjustment plate 112 away from the second adjustment plate 122, which is more convenient for operation.

In the present embodiment, the nut 140 is provided on a side of the second adjustment plate 122 close to the first adjustment plate 112, to allow the screw rod to continue to rotate to be located between the first adjustment plate 112 and the second adjustment plate 122 when a top end of the screw rod approaches the second adjustment plate 122, thereby allowing the hanging plate 120 to move farther relative to the mounting plate.

In other embodiments, the nut 140 may be provided on the side of the second adjustment plate 122 away from the first adjustment plate 112, and it is not limited thereto.

In other embodiments, a threaded hole may be formed directly in the second adjustment plate 122 to be in threaded connection with the screw rod. In this way, a simpler structure and an easier preparation of the mounting device 10 can be achieved.

In the present embodiment, the first adjustment plate 112 and the second adjustment plate 122 extend in a direction perpendicular to a main surface of the main support plate 111. Thus, the first adjustment plate 112 and the second adjustment plate 122 are stressed more properly during the rotation of the screw rod and the force acting on the screw rod is more efficient.

In other embodiments, the adjustment member 130 may be connected to the first adjustment plate 112 and abut against the second adjustment plate 122. The first adjustment plate 112 has a threaded hole or is provided with a nut 140 to be in threaded connection with the screw rod, to allow adjustment of the distance between the first adjustment plate 112 and the second adjustment plate 122.

The first adjustment plate 112 can have a guiding function during the mounting of the body of the range hood and the mounting device 10. After the body of the range hood is mounted to the mounting device 10, the first adjustment plate 112 limits the position of the body of the range hood to prevent the body of the range hood from separating from the mounting device 10 when the body of the range hood moves upwards by an external force, thereby improving the safety of the range hood.

In other embodiments, the adjustment member 130 may be a lifting mechanism. For example, a driving member and a lifting rod (not shown) are provided on one of the first adjustment plate 112 and the second adjustment plate 122, and the lifting rod abuts against another one of the first adjustment plate 112 and the second adjustment plate 122. The lifting or retracting of the lifting rod is driven by the driving member to adjust the distance between the first adjustment plate 112 and the second adjustment plate 122.

In the present embodiment, the hanging plate 120 further comprises a hook 123 provided at an end of the body plate 121 away from the second adjustment plate 122. The hook is configured to fit with the mounting hole of the body of the range hood to hang the body of the range hood.

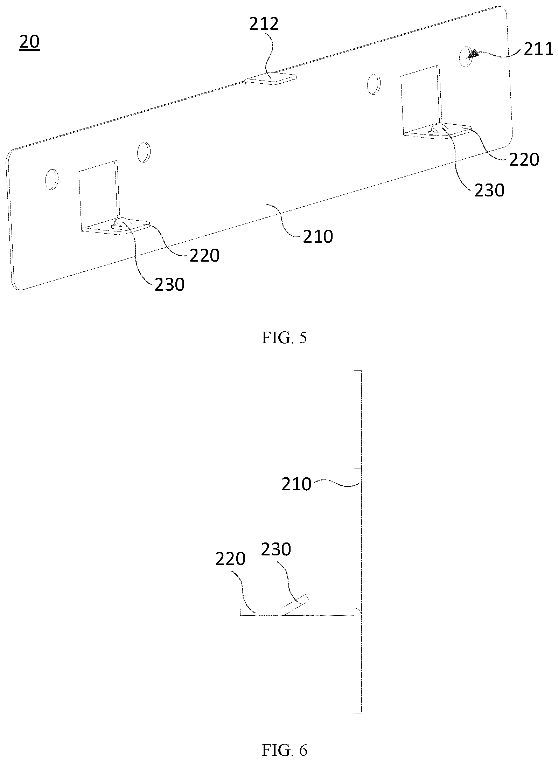

With reference to FIGS. 5 and 6, a mounting device 20 for the range hood according to another embodiment of the present disclosure comprises a mounting plate 210, a support plate 220, and a limit member. The support plate 220 is provided on the mounting plate 210, and the support plate 220 extends in a direction away from the mounting plate 210 and is configured to support the body of the range hood. The limit member is provided on a support surface of the support plate 220, and is configured to limit the position of the body of the range hood on the support plate 220 in a direction perpendicular to a main surface of the mounting plate 210. In this way, the body of the range hood can be mounted to the mounting device 20 in a flat pushing manner or in a manner of lifting at a height threshold and then being pushed. Compared with the mounting device for hanging a body of a range hood by means of a hook, the height at which the body of the range hood is required to be lifted is relatively small. Accordingly, when the range hood is mounted in a cabinet, the gap between the body of the range hood and the bottom of the cabinet can be reduced or even eliminated, thereby making the overall structure more compact and reducing the occupied space.

In the present embodiment, the height threshold may be in a range of 3 mm to 5 mm, for example, 3 mm, 4.1 mm, or 5 mm. In an embodiment, in order to hang the body of the range hood by a hook, the height at which the body of the range hood is required to be lifted is about 20 mm.

In the present embodiment, the mounting plate 210 may be fixedly provided on a carrier, such as a wall, by fitting the mounting hole 211 with a fixing member such as a screw. In this way, the body of the range hood can be disposed on a carrier, such as a wall. In other embodiments, the mounting plate 210 may be fixed to a carrier, such as a wall, by snap-fitting, riveting, or the like, and it is not limited thereto.

In the present embodiment, the mounting plate 210 may further be provided with a guide member 212. The guide member 212 extends in a direction away from the mounting plate 210, and has a guiding function during the mounting of the body of the range hood and the mounting device 20. Further, after the body of the range hood is mounted to the mounting device 20, the guide member 212 limit the position of the body of the range hood to prevent the body of the range hood from separating from the mounting device 20 when the body of the range hood moves upwards by an external force, thereby improving the safety of the range hood.

In the present embodiment, the support plate 220 extends in the direction perpendicular to the main surface of the mounting plate 210, to facilitate the push-in mounting of the body of the range hood and more properly apply a force on the support plate 220. Accordingly, the body of the range hood is not prone to slide in a direction away from the mounting plate 110 under the gravity.

In the present embodiment, the support plate 220 may be integrally formed at the mounting plate 110 as a bending portion, to make the structure of the mounting device 20 more stable.

In other embodiments, the support plate 220 may be fixedly connected to the mounting plate 110 by adhering, welding, snap-fitting, and the like, which is not limited thereto.

In the present embodiment, the limit member is a limit plate 230. The limit plate 230 is provided obliquely with respect to the support plate 220, and has a first end connected to the support plate 220. The limit plate 230 extends toward the mounting plate 210 from the first end to a second end of the limit plate, to limit a position of the body of the range hood in the direction perpendicular to the main surface of the mounting plate 210 as the body of the range hood is supported by the support plate 220.

In the present embodiment, the limit plate 230 may be integrally formed at the support plate 220 as a bending portion, to make the structure of the mounting device 20 more stable.

In other embodiments, the limit plate 230 may be fixedly connected to the support plate 220 by adhering, welding, snap-fitting, and the like, which is not limited thereto.

In the present embodiment, the limit plate 230 may be an elastic plate to facilitate the push-in mounting of the body of the range hood.

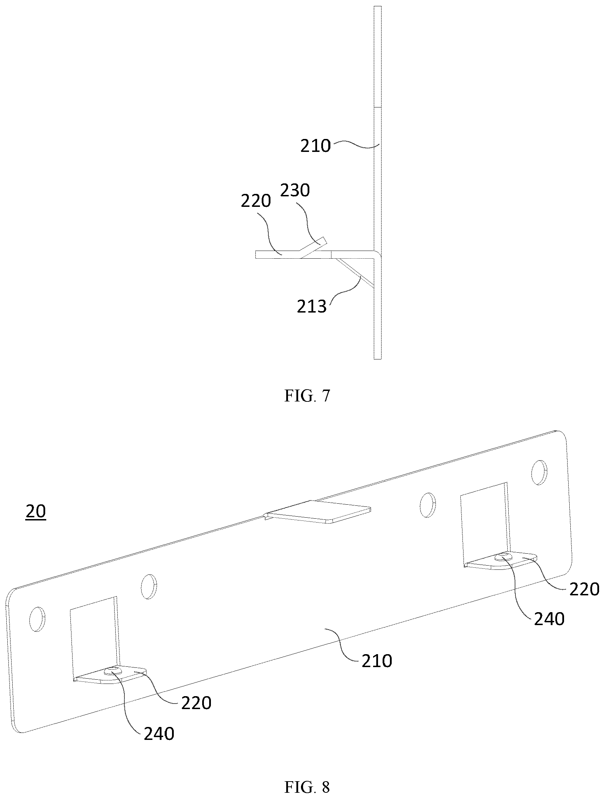

With reference to FIG. 7, in another embodiment, the mounting device 20 may further comprise a reinforcement member 213 connected between the support plate 220 and the mounting plate 210, to reinforce a supporting force of the support plate 220 to make the structure of the mounting device 20 more stable.

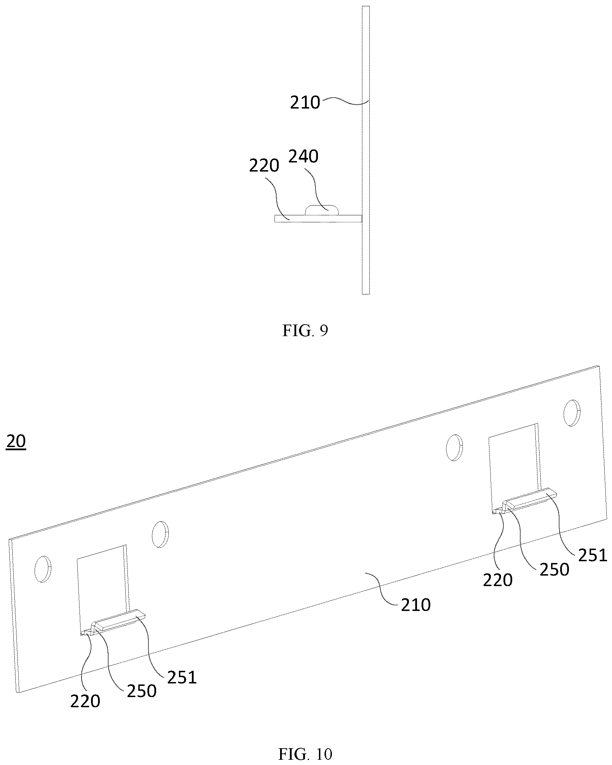

With reference to FIGS. 8 and 9, a mounting device 20 for the range hood according to yet another embodiment of the present disclosure comprises a mounting plate 210, a support plate 220, and a limit member. The structures of the mounting plate 210 and the support plate 220 are referred to the above embodiments of the mounting device 20, which will not be described in detail herein.

In the present embodiment, the limit member is a protrusion 240 protruding from the support surface of the support plate 220, to limit a position of the body of the range hood in the direction perpendicular to the main surface of the mounting plate 210 as the body of the range hood is supported by the support plate 220.

In the present embodiment, the protrusion 240 may be integrally formed with the support plate 220 to make the structure of the mounting device 20 more stable.

In other embodiments, the protrusion 240 may be fixedly connected to the support plate 220 by adhering, welding, snap-fitting, and the like, which is not limited thereto.

In the present embodiment, the protrusion 240 may be made of an elastic material, to facilitate the push-in mounting of the body of the range hood.

In the present embodiment, the protrusion 240 may be in a cylindrical shape. In other embodiments, the protrusion 240 may be a square post or have other post structure, which is not limited thereto.

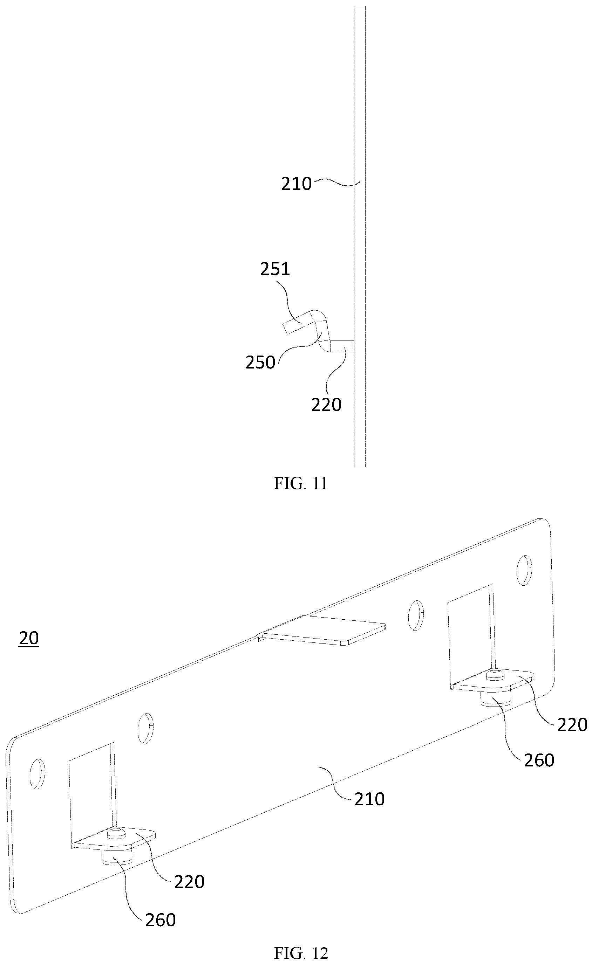

With reference to FIGS. 10 and 11, a mounting device 20 for the range hood according to further another embodiment of the present disclosure comprises a mounting plate 210, a support plate 220, and a limit member. The structures of the mounting plate 210 and the support plate 220 are referred to the above embodiments of the mounting device 20, which will not be described in detail herein.

In the present embodiment, the limiting member is a limiting plate 250. The limit plate 250 is provided obliquely with respect to the support plate 220, and has a first end connected to an end of the support plate 220 away from the mounting plate 210. The limit plate 250 extends toward the mounting plate 210 from the first end to a second end of the limit plate, to limit a position of the body of the range hood in the direction perpendicular to the main surface of the mounting plate 210 as the body of the range hood is supported by the support plate 220.

In the present embodiment, the limit plate 250 may be integrally formed with the support plate 220 to make the structure of the mounting device 20 more stable.

In other embodiments, the limit plate 250 may be fixedly connected to the support plate 220 by adhering, welding, snap-fitting, and the like, which is not limited thereto.

In the present embodiment, the limit plate 250 may be made of an elastic material, to facilitate the push-in mounting of the body of the range hood.

In the present embodiment, the limit plate 250 may be provided with an extension portion 251, and the extension portion 251 extends away from the mounting plate 210 from the second end of the limit plate 250, to guide the body of the range hood during the push-in mounting of the body of the range hood, thereby facilitating the mounting of the body of the range hood with the mounting device 20.

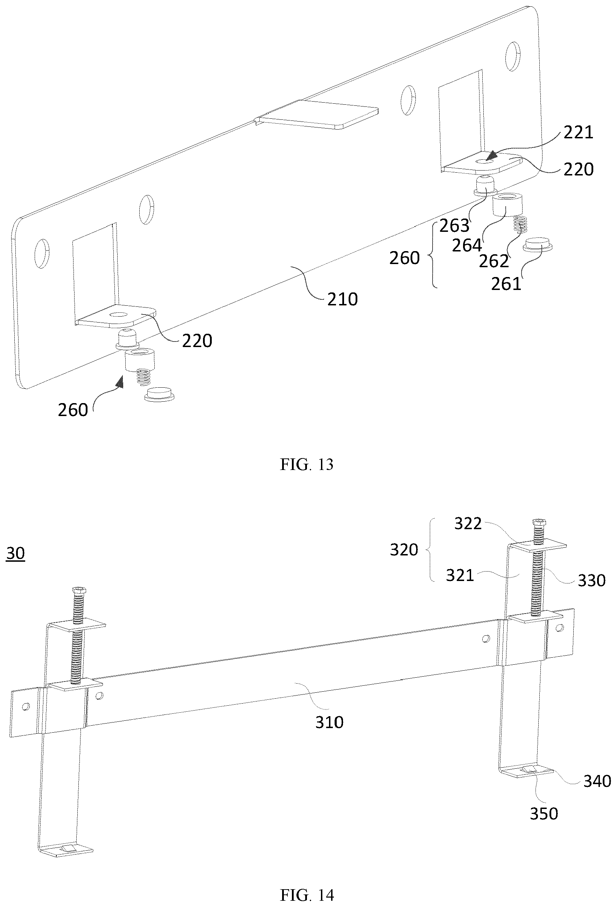

With reference to FIGS. 12 and 13, a mounting device 20 for the range hood according to another embodiment of the present disclosure comprises a mounting plate 210, a support plate 220, and a limit member. The structures of the mounting plate 210 and the support plate 220 are referred to the above embodiments of the mounting device 20, which will not be described in detail herein.

In the present embodiment, the support plate 220 is formed with a through hole 221, and the limit member is a floating mechanism 260. The floating mechanism 260 comprises a fixing base 261, an elastic member 262, and a limit cap 263. The fixing base 261 is fixedly connected to a side of the support plate 220 away from the support surface supporting the body of the range hood. An end of the elastic member 262 is disposed on the fixing base 261, and the limit cap 263 is connected to another end of the elastic member 262 and passes through the through hole 221. When the body of the range hood is pushed in, the limit cap 263 can move downwards under a pushing force of the body of the range hood to compress the elastic member 262. After the body of the range hood is completely pushed in, the pushing force acting on the limit cap 263 is removed, and the limit cap 263 can move upwards under the elastic force of the elastic member 262 to protrude from the support surface of the support plate 220, thereby limiting the position of the body of the range hood in the direction perpendicular to the main surface of the mounting plate 210.

In the present embodiment, the elastic member 262 may be a spring. In other embodiments, the elastic member 262 may be a silicone column, a rubber column, or the like, which is not limited thereto.

In the present embodiment, the floating mechanism 260 may further comprise a fixing sleeve 264, which is provided on the fixing base 261 and sheathes around the elastic member 262. The limit cap 263 passes through the fixing sleeve 264 and protrudes from the fixing sleeve 264. The fixing sleeve 264 can achieve the protection and guiding functions on the elastic member 262, to make the movement process of the limit cap 263 more stable.

With reference to FIG. 14, a mounting device 30 for the range hood according to yet another embodiment of the present disclosure comprises a mounting plate 310, a hanging plate 320, and an adjustment member 330. The structures of the mounting plate 310, a body plate 321 of the hanging plate 320, a second adjustment plate 322 and the adjustment member 330 are referred to the above embodiments of the mounting device 10, which will not be described in detail herein.

The present embodiment differs from the above embodiments of the mounting device 10 in that, in the present embodiment, the hanging plate 320 further comprises a support plate 340, which is provided at an end of the body plate 321 away from the second adjustment plate 322 and extends away from the body plate 321. The support plate 340 is provided with a limit member, and the limit member is configured to limit the position of the body of the range hood supported by the support plate 340. In this way, the body of the range hood can be mounted to the mounting device 30 in a flat pushing manner or in a manner of lifting at a height threshold and then being pushed. Compared with the mounting device 10 for hanging a body of a range hood by means of a hook, the height at which the body of the range hood is required to be lifted is relatively small. After the body of the range hood is mounted to the mounting device 30, a required height to be adjusted by the adjustment member 330 is relatively small, and therefore the dimensional requirement of the adjustment member 330 is also less. Accordingly, the space required by the body of the range hood is relatively small and the application of the body of the range hood is wider. When the range hood is mounted in a cabinet, a gap between the body of the range hood and the bottom of the cabinet can be reduced or even eliminated, thereby making the overall structure more compact and reducing the occupied space.

In the present embodiment, the limit member is a limit plate 350, and the structure of the limiting plate 350 is referred to the limit plate 230 in the above embodiments of the mounting device 20, which will not be described in detail herein.

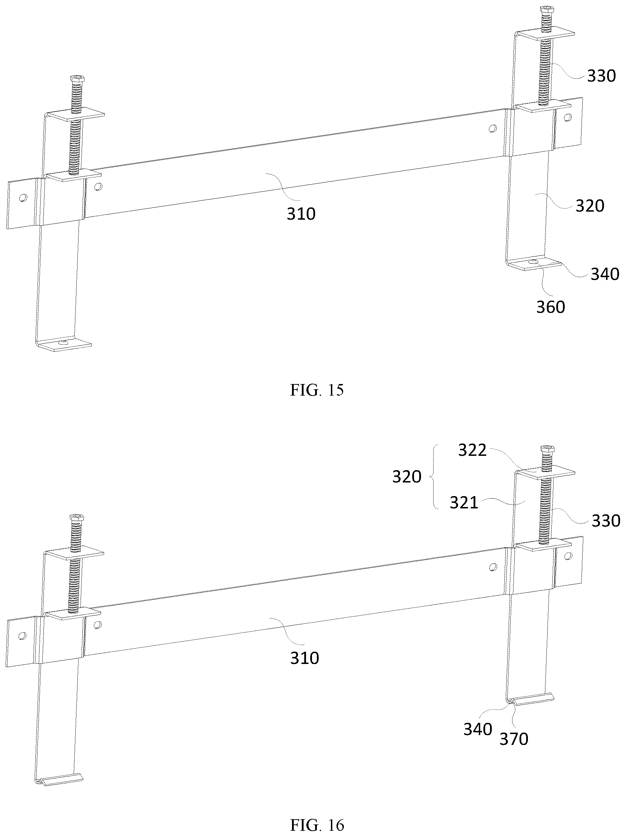

With reference to FIG. 15, in another embodiment, the limit member may be a protrusion 360 protruding from the support surface of the support plate 340. The structure of the protrusion 360 is referred to the protrusion 240 in the above embodiments of the mounting device 20, which will not be described in detail herein.

With reference to FIG. 16, in another embodiment, the limit member may be a limit plate 370, and the structure of the limit plate 370 is referred to the limit plate 250 in the above embodiments of the mounting device 20, which will not be described in detail herein.

In another embodiment, the limit member may be a floating mechanism (not shown), the structure of the floating mechanism is referred to the floating mechanism 260 in the above embodiments of the mounting device 20, which will not be described in detail herein.

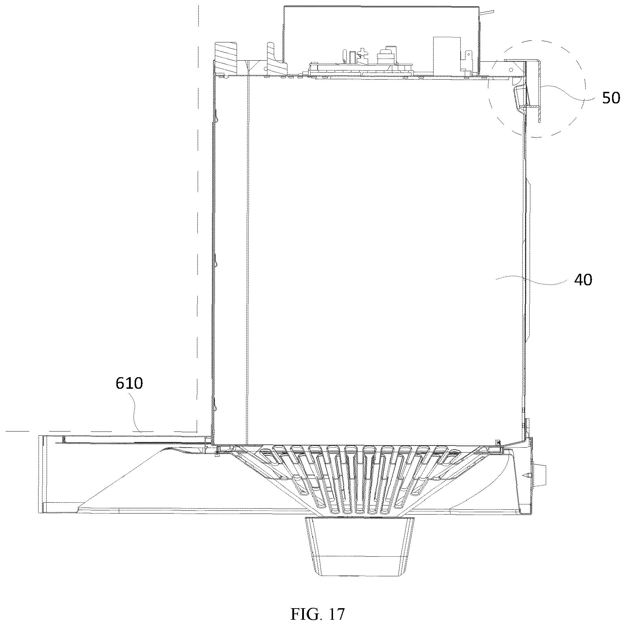

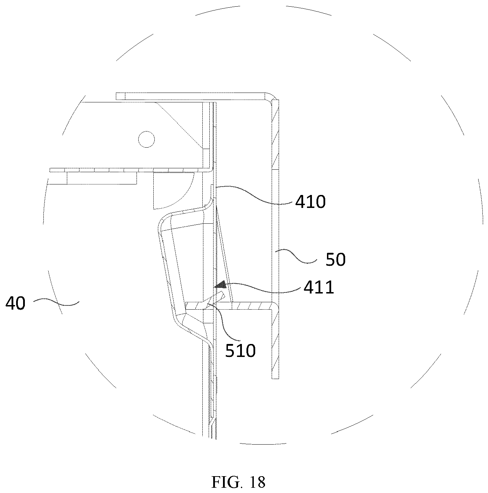

With reference to FIGS. 17 and 18, a range hood of an embodiment of the present disclosure comprises a body 40 and a mounting device 50. The body 40 comprises a back plate 410 having a mounting hole 411. The mounting device 50 comprises a limit member 510 or a hanging plate (not shown), and the limit member 510 or the hanging plate fits with the mounting hole 411 to mount the body 40 on the mounting device 50.

The particular structure of the mounting device 50 is referred to the mounting devices of the above embodiments, which will not be described in detail herein.

The body 40 can be more conveniently mounted by the mounting device 50 in the present embodiment. When the range hood is mounted in a cabinet, a gap between the range body 40 and the bottom of the cabinet 610 can be reduced, thereby making the overall structure more compact and reducing the occupied space.

The foregoing description is merely embodiments of the present disclosure, and is not intended to limit the scope of the present disclosure thereto. Any equivalent structure or equivalent process transformation made by using the contents of the specification of the present disclosure and the attached drawings, or directly or indirectly applied in other related technical fields, is comprised in the scope of the present disclosure.

## Claims

1. A mounting device for a range hood, wherein the mounting device comprising:
a mounting plate;
a support plate provided on the mounting plate and extending away from the mounting plate, the support plate supporting a body of the range hood; and
a limit member provided on a support surface of the support plate, the limit member limiting a position of the body of the range hood on the support plate in a direction perpendicular to a main surface of the mounting plate.

2. The mounting device according to claim 1, wherein the support plate extends in the direction perpendicular to the main surface of the mounting plate.

3. The mounting device according to claim 2, wherein the support plate is integrally formed at the mounting plate as a bending portion; or
the support plate is fixedly connected to the mounting plate.

4. The mounting device according to claim 1, wherein the limit member is a limit plate arranged obliquely with respect to the support plate, the limit plate having a first end connected to the support plate, and the limit plate extending toward the mounting plate from the first end to a second end of the limit plate.

5. The mounting device according to claim 4, wherein the limit plate is integrally formed at the support plate as a bending portion; or
the limit plate is fixedly connected to the support plate.

6. The mounting device according to claim 1, wherein the limit member is a protrusion protruding from the support surface of the support plate.

7. The mounting device according to claim 6, wherein the protrusion and the support plate are integrally formed; or
the protrusion is fixedly connected to the support plate.

8. The mounting device according to claim 6, wherein the protrusion is made of an elastic material.

9. The mounting device according to claim 6, wherein the protrusion is a cylindrical or square post.

10. The mounting device according to claim 1, wherein the limit member is a limit plate arranged obliquely with respect to the support plate, the limit plate having a first end connected to an end of the support plate away from the mounting plate, and the limit plate extending away from the mounting plate from the first end to a second end of the limit plate.

11. The mounting device according to claim 10, wherein the limit plate and the support plate are integrally formed; or
the limit plate is fixedly connected to the support plate.

12. The mounting device according to claim 10, wherein the limit plate is made of an elastic material.

13. The mounting device according to claim 10, wherein the limit plate has an extension portion extending away from the mounting plate from the second end of the limit plate.

14. The mounting device according to claim 1, wherein the support plate has a through hole; and
the limit member is a floating mechanism, wherein the floating mechanism comprising:
a fixing base fixedly connected to a side of the support plate facing away from the support surface of the support plate, the support surface supporting the body of the range hood;
an elastic member having an end provided on the fixing base; and
a limit cap connected to another end of the elastic member and passing through the through hole.

15. The mounting device according to claim 14, wherein the floating mechanism further comprises a fixing sleeve provided on the fixing base and sheathing around the elastic member, wherein the limit cap passing through the fixing sleeve and protruding from the fixing sleeve.

16. The mounting device according to claim 1, wherein the mounting plate further has a guide member extending away from the mounting plate.

17. The mounting device according to claim 1, further comprising:
a reinforcement member connected between the support plate and the mounting plate.

18. A range hood, comprising:
a body; and
a mounting device according to any one of claims 1 to 17,
wherein the body comprises a back plate having a mounting hole, the limit member being engaged into the mounting hole to mount the body of the range hood on the mounting device.
